# EUROPEAN PATENT APPLICATION

(11) **EP 2 163 974 A1**
(43) Date of publication of application: **17.03.2010**
(21) Application number: 09170363.7
(22) Date of filing: 15.09.2009
(51) Int. Cl.: G06F 3/048, G01C 21/20, G09B 29/10

(54) **A campus orientation system**

(30) Priority: 15.09.2008 IE 20080746
(71) Applicant: Letterkenny Institute of Technology, County Donegal (IE)
(72) Inventor: Farrelly, William, BT48 8PB Northern Ireland (IE); Ksiazak, Piotr, Warszawa (PL)
(74) Representative: McCrann, Sarah Ann

(57) **Abstract**

Method and system of providing orientation information to a user via his handheld mobile communications device, the orientation information relating to a campus. Providing information via a handheld mobile communications device is a convenient way of disseminating information to a large number of people but has the drawback that the campus orientation system must operate quickly and using the limited resources, such as memory and processing time, available to it on the handheld mobile communications device. The system comprises making use of an campus image map file and by defining the rooms therein by two corners thereof.

## Description

### Introduction

The present invention relates to a method of providing orientation information for a campus. In particular the invention relates to a method operating in a campus orientation system on a handheld mobile communications device.

Everyone is familiar with the confusion that can occur when first visiting a new building or campus, such as a college, office or shopping centre. The user is not aware where any of the particular features or amenities of that campus can be found. This is a particular disadvantage in a school or college situation where the user may be required to be in a particular location for a class at a certain time. Additionally, in many cases, there may be minimal information available to the user to assist him in locating the required room.

It is very common nowadays for persons to be equipped with a handheld mobile communications device and it would therefore be very useful if these devices could be used to help new visitors to a particular campus. There are however many potential problems associated with attempting to provide such a system. Handheld mobile communications devices, such as mobile telephones, are by their nature limited in their processing power and available memory. Therefore any campus orientation solution provided for use on handheld mobile communication devices should provide adequate results without taking up large amounts of memory or using too much processing power. For a campus operator to obtain maximum benefit from such a campus orientation system, it should be as convenient to use as possible and as widely applicable as possible. Users will quickly lose patience with a service that is slow to install or use, impairs their phone's operation or simply won't work with their phone as it is not the latest model.

US Patent Application Publication No. US2003/0184594 discloses a system and method that a handheld mobile communications device to provide information to user about an object, such as a building, at which the handheld mobile communications device is pointed. The system requires that the handheld mobile communications device mobile communications device be equipped with a position and attitude determining facility.

Clearly, the majority of handheld mobile communications device do not comprise such facilities, thereby greatly reducing the usefulness of the system and method disclosed in this patent application.

US Patent Application Publication No. US2007/0001904 discloses a navigation method and system based on the provision of a large number of RF or Bluetooth tags throughout a campus that will communication location information to a user's handheld mobile communications device. Clearly this requires a significant hardware expenditure from the campus operator which is a significant disadvantage.

Throughout the specification the term campus has been used to refer to one or more buildings such as a school, college, office complex, hotel, conference centre, shopping centre, festival, airport, railway station, commuter rail system, exhibition space, construction site, museum, factory, town, ship or the like. If the campus comprises a plurality of buildings, the buildings may be adjacent or remote from each other. Similarly, the term room has been used to describe a rectangular sub-division of a building or campus, and may refer to a single room, a portion of a room, a group of contiguous rooms, a corridor, foyer or lobby area; a complete building, outbuildings or an outdoor area. Additionally, the term 'map' is to be interpreted in the broadest sense, this definition includes geographic maps, building plans, utility maps such as those indicating water supply piping, electricity cabling, network cabling and the like, town plans, building plans, airport layouts and the like. All search criteria on these maps are also covered by the definition.

It is an object therefore of the present invention to provide a method of providing orientation information for a campus that overcomes at least some of the above problems. It is a further object of the invention to provide a method of providing orientation information for a campus that is efficient and convenient to use.

### Statements of Invention

According to the invention there is provided a method of providing orientation information for a campus, the method operating in a campus orientation system on a handheld mobile communications device,
wherein the handheld mobile communications device comprises
a visual display;
a visual display rendering module for controlling the content to be rendered on the visual display;
a cursor module for operating a cursor on the visual display;
the campus orientation system comprising
a processing module;
campus map image file memory adapted to store a campus map image file, the campus map image file comprising an array of pixels, each having a first pixel co-ordinate and a second pixel co-ordinate, the pixel co-ordinates being associated with the pixel's location in the array; and
a memory module comprising an array of room data structures, each room data structure corresponding to a room of the campus map image file and comprising
   at least one field of room description data;
   a first room definition point and a second room definition point,
   wherein the first room definition point corresponds to a first corner of the room and the second room definition point corresponds to a second corner of the room, diagonally opposite the first corner,
   each room definition point comprising a first point co-ordinate and a second point co-ordinate,
the steps of the method comprising
(a) an initial step of the processing module sorting the array of room data structures according to one point co-ordinate;
   and subsequently, in use,
(b) the visual display rendering module rendering the map image file on the visual display;
(c) the cursor module providing a pair of cursor co-ordinates, corresponding the cursor's location on the visual display, to the processing module, the pair of cursor co-ordinates comprising a first cursor co-ordinate and a second cursor co-ordinate;
(d) the processing module performing a binary search of the array of room data structures, comparing one cursor co-ordinate with the point co-ordinate according to which the room data structures are sorted;
(e) the processing module identifying the room data structure having the closest first point co-ordinate of the first room definition point to the first cursor co-ordinate;
(f) the processing module checking if the cursor's location is comprised within the identified room data structure;
(h) if the result of step (f) is positive, the processing unit retrieving the room description data from the identified room data structure.

In this way, a user may navigate his cursor to a location on the map displayed on this phone and obtain information relating to the room in which his cursor is situated. The information may be displayed on screen or alternatively, may be used at the body of a text message or email for transmission to a third party. The room data structures allow rooms on the map to be identified easily and using very small amounts of memory. Using a pair of room definition points, one representing one corner of a rectangle and the other representing a diagonally opposite corner, allows a room to be represented by four values, which is a very efficient use of the limited memory. Furthermore, the room data structure of this nature allows the array thereof to be sorted according to one co-ordinate, which in turn allows the use of a binary search algorithm to identify the room in which the cursor is located. The binary search algorithm allows for very efficient processing of the data, providing fast results and limiting the processing power required by the handheld mobile communications device. Additionally, in combination with the room data structure, the method of searching is particularly suited for use on a handheld mobile communications device given that only log₂N (where N is the length of the array of room data structures) four greater or less than comparisons must be carried out by the processing module in identifying the room data structure that corresponds to the cursor's location on the displayed map. This in turn reduces the processing time required by the CPU of the handheld mobile communications device. In general, the method of the invention can be performed while the main processes of the handheld mobile communications device are paused as the screen is re-drawn. It is clear that the less complex the method of the invention, the less memory, processing time and processing power required on the handheld mobile communications device, then the more widely applicable the method of the invention will be. A campus orientation system that is only useful to users having very up-to-date handheld mobile communications devices will not be of interest to campus operators.

In one embodiment of the invention there is provided a method comprising the additional steps of :
(i) in the case of the result of step (f) being negative, repeating step (f) for the adjacent room data structures in the sorted array of room data structures until a match is found and then returning to step (h).

In another embodiment of the invention there is provided a method in which step (i) comprises performing step (f) for the room data structure in the sorted array previous to the identified room data structure. Similarly, there is provided a method in which step (i) comprises performing step (f) for the room data structure in the sorted array subsequent to the identified room data structure. In this way, the processing module will check each of the room data structures in the array in increasing distance until a match for the cursor's location is identified. If the first identified room data structure is x, then the room data structures are searched in the following order x, x+1, x-1, x+2, x-2, x+3, x-3 and so on until a match is found or the end of the array is reached.

In a further embodiment of the invention there is provided a method in which step (f) comprises
(j) the processing module checking if the first cursor co-ordinate is between the first point co-ordinate of the first room definition point of the identified room data structure and the first point co-ordinate of the second room definition point of the identified room data structure; and
(k) if the result of step (j) is positive, the processing module checking if the second cursor co-ordinate is between the second point co-ordinate of the first room definition point of the identified room data structure and the second point co-ordinate of the second room definition point of the identified room data structure

In this way, the method can accurately determine if the cursor's location lies within the room identified by the binary search.

In one embodiment of the invention there is provided a method comprising the additional step of: (I) the processing module passing the retrieved room description data to the visual display rendering module for display. In this way, the information on the room is displayed to the user when he places his cursor in that room on the map.

In another embodiment of the invention there is provided a method in which the step of the visual display rendering module rendering the map image file on the visual display comprises
the visual display rendering module rendering a portion of the campus map image file on the visual display; and
the method comprises the additional steps of
the processing module converting the cursor co-ordinates into modified cursor co-ordinates corresponding the cursor's location on the campus map image file; and
using the modified cursor co-ordinates in place of the cursor co-ordinates in the remaining steps.

In this way, a zoomed-in portion of the map can be displayed on the display of the handheld mobile communications device. This allows the map to be displayed at a useful resolution. The user can scroll through different portions of the map to the desired room.

In a further embodiment of the invention there is provided a method in which the step of the processing module sorting the array of room data structures according to one point co-ordinate comprises sorting the array using an insertion sort algorithm. This is a particularly efficient way of providing the sorted array.

In an alternative embodiment of the invention there is provided a method in which each room data structure consists of: at least one room description data field; a first room definition point; and a second room definition point; each room definition point consisting of a first point co-ordinate and a second point co-ordinate This is a particularly efficient way of reducing the memory required to provide the method of the invention. By limiting the memory required to four integer values and one or more string values, the memory is minimized and can be controlled by further limiting the number of room description data fields. Preferably, the room description fields comprise a building code description field, a room number description field and a room title description field. This provides an adequate level of information about a room to identify its purpose while also limiting the memory required to three string values.

According to the invention there is further provided a campus orientation system for use in a handheld mobile communications device, the campus orientation system comprising
a processing module;
campus map image file memory adapted to store a campus map image file, the campus map image file comprising an array of pixels, each having a first pixel co-ordinate and a second pixel co-ordinate, the pixel co-ordinates being associated with the pixel's location in the array;
a memory module comprising an array of room data structures, each room data structure corresponding to a room of the campus map image file and comprising
   at least one field of room description data;
   a first room definition point and a second room definition point,
   wherein the first room definition point corresponds to a first corner of the room and the second room definition point corresponds to a second corner of the room, diagonally opposite the first corner,
   each room definition point comprising a first point co-ordinate and a second point co-ordinate.

In this way, the campus orientation system can provide information to a user regarding rooms on the map, consumes very little memory and allows for the use of binary search algorithm to identify the room associated with a cursor location on a display the handheld mobile communications device.

In an embodiment of the invention there is provided a campus orientation system in which the co-ordinates are integer values. This is a particularly efficient use of memory as the amount of memory required to store the four integers to define a room is very small.

In one embodiment of the invention there is provided a campus orientation system in which the handheld mobile communications device comprises
a visual display;
a visual display rendering module for controlling the content to be rendered on the visual display;
a cursor module for operating a cursor on the visual display;
   wherein the processing module is adapted to
   instruct the visual display rendering module to render the campus map image file on the visual display;
   receive the location of the cursor on the visual display from the cursor module;
   calculate the pixel co-ordinates corresponding to the cursor's location on the visual display;
   identify the room data structure associated with the position of the cursor by carrying out a binary search of the an array of room data structures; retrieve the room description data for the identified room data structure.

This will assist the user in finding required rooms in a simple and efficient manner. Additionally, the campus orientation system allows for efficient use to the limited resources of memory and processing on the handheld mobile communications device. Defining rooms using only four values is an efficient use of memory and allows for easy sorting of the room data structure array, which in turn allows for the use of the binary search algorithm.

In an embodiment of the invention there is provided a campus orientation system in which the processing module is further adapted to instruct the visual display rendering module to display the retrieved room description data. In this way, the information may be displayed conveniently to the user on the screen.

In a further embodiment of the invention there is provided a campus orientation system in which the array of room data structures are sorted according to one point co-ordinate. In this way, the array of room data structures may be sorted in a manner particularly suited to a campus or building's layout. In some situations, it may be more convenient to sort the array according to the x co-ordinate and in some other situations, the y co-ordinate may be more suitable. Similarly, in some circumstances, the use of one room definition point, for example upper corner, may be more suitable than the other, for example a lower corner. The invention works when the array is sorted according to any of the point co-ordinates.

In another embodiment of the invention there is provided a campus orientation system in which each room data structure consists of: at least one room description data field; a first room definition point; and a second room definition point; each room definition point consisting of a first point co-ordinate and second point co-ordinate. Limiting the amount of information that can be stored in a room data structure is a particularly efficient way or reducing the memory required to provide the method of the invention.

In a further embodiment of the invention there is provided a campus orientation system
wherein the room description data comprises a building code description field, a room number description field and a room title description field. This is particularly useful information that may be desired by a user about a room.

In an alternative embodiment of the invention there is provided a campus orientation system in which the memory module further comprises an array of campus staff data structures, each comprising staff name, staff office title and staff telephone number. In this way, staff information may be provided to the user as well as location information.

In an embodiment of the invention there is provided a campus orientation system further comprising a search module adapted to carry out searches on the array of campus staff data structures. In this way, a user can search for a staff member by name and be presented with their office details and contact details. The system of the invention may be configured to allow a user to call the number that is stored for the staff member.

In one embodiment of the invention there is provided a campus orientation system in which the search module is adapted to carry out searches of the room data structures based on room title description field. In this way, the location of the office can be identified and the relevant section of the campus map image file be displayed on the handheld mobile communications device.

In a further embodiment of the invention there is provided a method in which the first room definition point corresponds to a first corner of the room and the second room definition point corresponds to a second corner of the room, diagonally opposite the first corner. This is a particularly memory efficient way of defining a rectangular room in memory. In this way, the room definition points define a rectangle, which is a very convenient manner of defining the characteristics of a room, as most rooms can be described as being rectangular in shape, or can be represented by a combination of rectangles. Additionally, the use of only two pairs of coordinates to define a full room is a very memory efficient storage mechanism.

### Detailed Description of the Invention

The invention will now be more clearly understood from the following description of an embodiment thereof given by way of example only with reference to the accompanying drawings in which:-
Fig. 1 is a diagrammatic representation of a handheld mobile communications device comprising the invention;
Fig. 2 is a block diagram of the campus orientation system of the invention;
Fig. 3 is a diagrammatic representation of the room data structure of the invention;
Figs. 4(a), (b) and (c) are illustrations of the menu structure of the system of the invention; and
Fig. 5 is a flow diagram of the operation of the positioning module of the invention; and
Fig. 6 is a flow diagram of the operation of the campus orientation system of the invention.

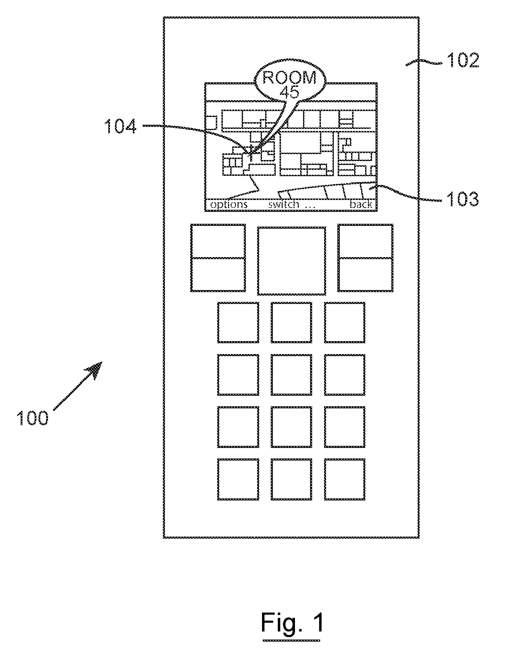

Referring to the drawings, and initially to Fig. 1 thereof, there is shown a campus orientation system indicated generally by the reference numeral 100, installed on a handheld mobile communications device 102 having a visual display displaying a campus map image 103 from a campus map image file (not shown) stored in campus map image file memory (not shown). The visual display further comprises a cursor 104 which has been positioned at a particular room on the map and the campus orientation system has returned an information box 105 on screen containing details about that room, including its room number.

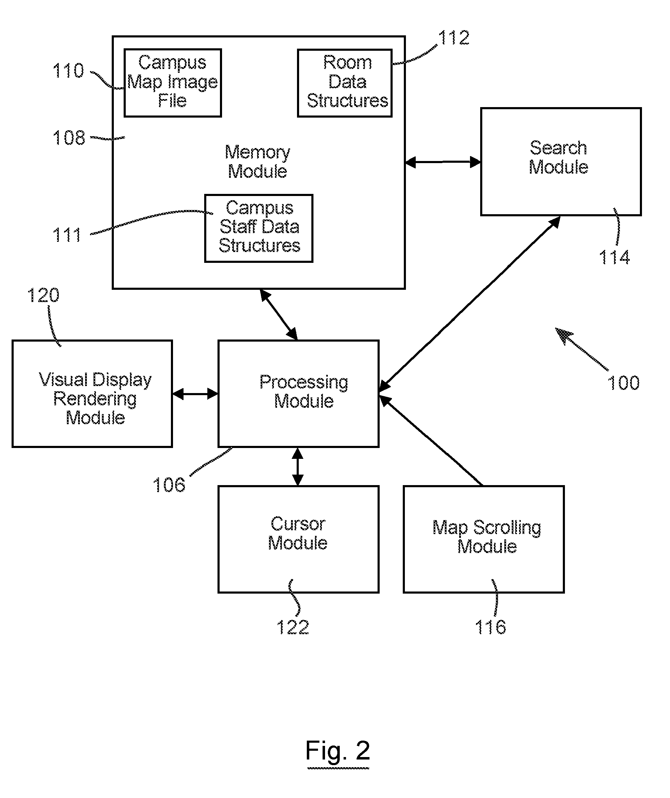

Referring now to Fig. 2 there is shown a block diagram of the campus orientation system 100 of the invention. The campus orientation system 100 comprises a processing module 106; a memory module 108 having a campus map image file 110, an array of campus staff data structures 111 and an array of room data structures 112 stored therein; a search module 114; a map scrolling module 116; a visual display rendering module 120 and a cursor module 122. The processing module 106 is connected to the map scrolling module 116, the memory module 108, the search module 114, and the cursor module 122. The search module 114 is in turn connected to the memory module 108 and the cursor module 122 is in turn connected to the visual display rendering module 120. The campus map image file memory (not shown) in which the campus map image file is stored may be comprised within the memory module or may be in a separate memory module.

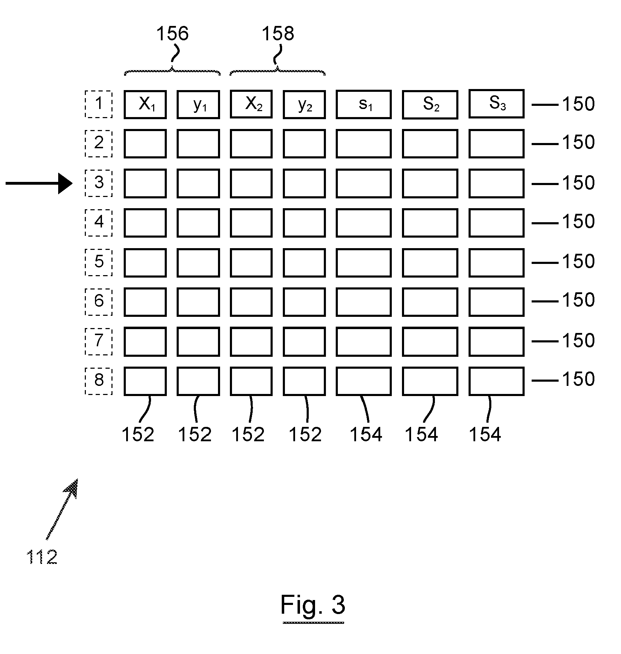

Referring now to Fig. 3, there is shown a diagrammatic representation of a the array of room data structures, indicated generally by the reference numeral 112, which are used to store the room data structures 150 in the memory module 108. Each room data structure 150 comprises four integer values 152 and three string values 154. Each integer value stores one point co-ordinate of a room definition point such that the four integer values correspond to a pair of coordinates, a first corner 156 and a second corner 158, diagonally opposite the first room so that between them, the first corner 156 and second corner 158 define a rectangular room. Each of the string values 154 comprise information on the room such as building code, room number and room description. In this way, using a very limited amount of memory, sufficient information is stored to clearly identify a room and allow a user to search for and identify that room.

In use, when a user want to make use of the campus orientation system, he selects a map to view which causes the processing module 106 to open a campus map image file 110 stored in campus map image file memory (not shown), causing that campus map image 103 to be displayed statically on the visual display of the handheld mobile communications device 102. The user may move through the map using the cursor 104.

The cursor module 122 calculates the location, in pixels, of the cursor 104 in the visual display. The initial portion of map displayed is that portion of the map centred on a reception area (or other point of first congregation), and is optimised for visual impact, such that sufficient detail is shown to provide suitable perspective and detail to the user. The entire map is divided into user-display sized blocks. If the user moves the cursor 104 towards the edge of the visual display, and therefore towards the edge of the displayed map, the region of the map that is displayed is changed so as to show more of the map in the direction that the cursor has been moved. This results in the adjusted displayed map generally comprising 50% of the current map block and 50% of the adjacent map block. A smoothing algorithm is implemented in the map scrolling module 116 so as to gradually move the map when it is redrawn. The boundary point where the map scrolling module 116 starts to change the map view can be adjusted. Typically, the map scrolling module 116 starts to move the region of the map that is displayed when the user moves the cursor 104 beyond a boundary of 75% of the current screen width or height. The processing module calculates the position of the cursor on the campus map image 103 based on the location of the cursory on the visual display and the portion of the map image that is currently displayed on the visual display.

When the cursor is located in a particular room of the map, the details of that room, comprising the room number, the room description and the building code are displayed on the visual display in an information box 104. The cursor module returns the location in pixels of the cursor in the visual display. This location will comprise a pair of Cartesian coordinates; having an first cursor co-ordinate, corresponding to an x value, and a second cursor co-ordinate, corresponding to a y value. These values are passed to the processing 106 module which identifies the room in which the cursor is located and returns the room details for display or other subsequent processing.

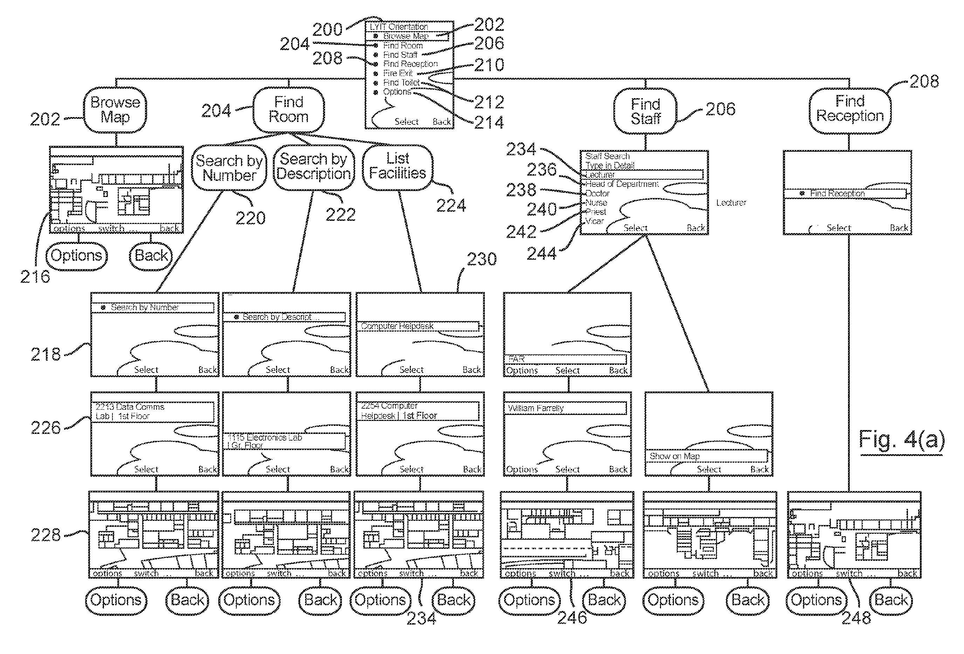

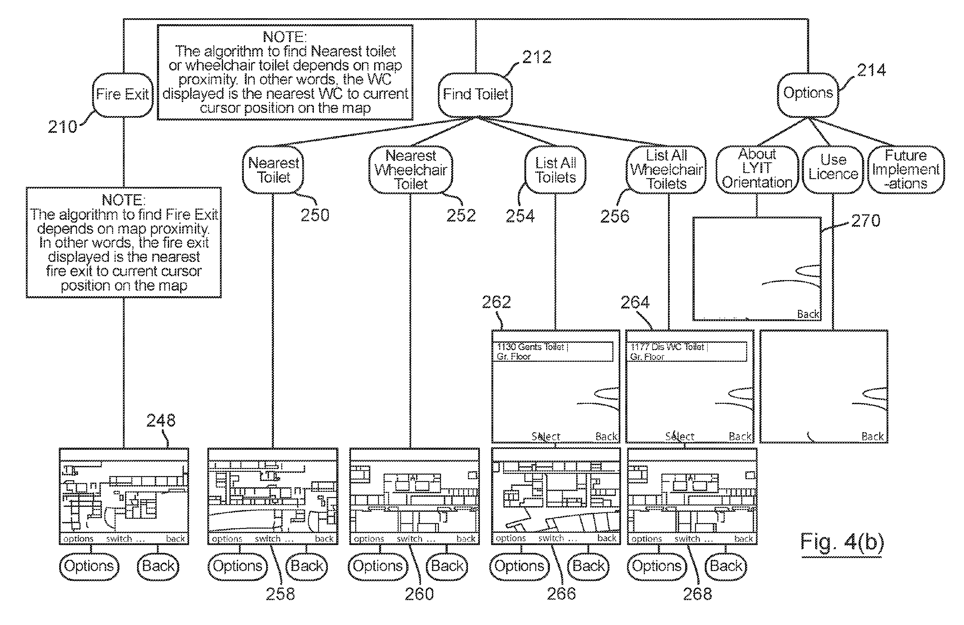

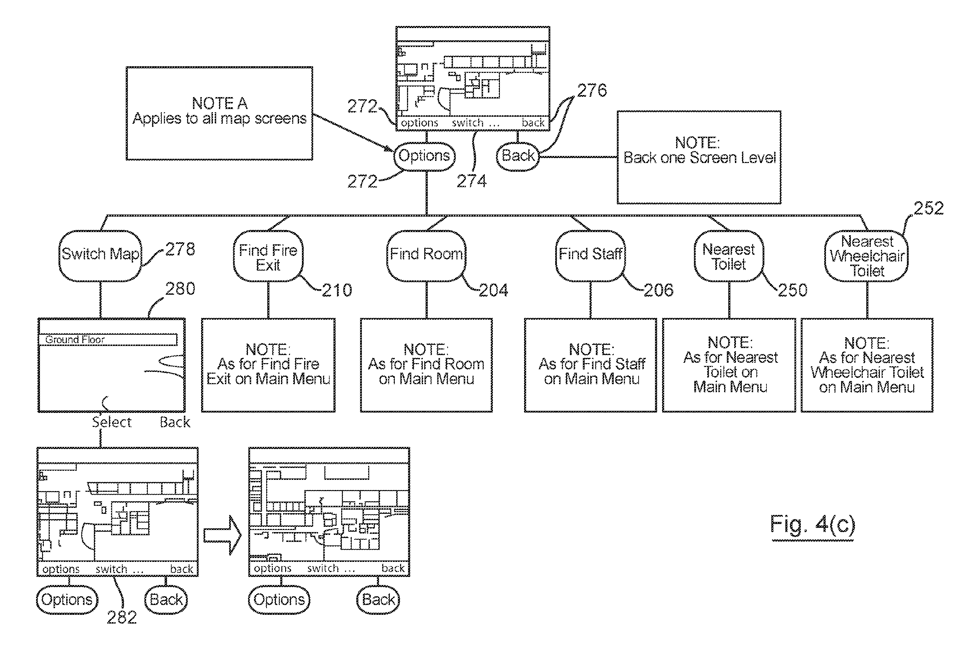

Referring now to Figs. 4 (a), (b) and (c) there is shown the menu system and flow of operation of the campus orientation system 100 of the invention. Fig. 4(a) shows the first user menu 200 of the campus orientation system 100. The menu comprises the options of Browse Map 202, Find Room, 204, Find Staff 206, Find reception 208, Fire Exit 210, Find Toilet 212 and Options 214 and Help.

By selecting Browse Map 202, the user is brought to main map 216 for the campus. The initial portion of map displayed is centred on a reception area, however, this can be adjusted to show any of the predefined rooms when the map is initialised.

By selecting Find Room 204, the user is presented with a further menu 218 comprising the options of Search by Number 220, Search by Description 222 and List Facilities 224. If Search by Number 220 is selected, the user may enter a room number, the campus orientation system 100 will perform a search and return a list of matches 226, from which the user selects the desired entry, the map 228 for the location of which is then displayed on the visual display. A similar operation occurs if the Search by description option 222 is chosen.

If the List Facilities option 224 is chosen, a list of the most commonly used facility types in the campus is displayed 230, which the user may scroll through until he finds the desired room type. Room types include Reception, Baby Changing Room, Computer Help Desk, Library, Canteen, Student Shop, Student Union and ATM. Computer Help Desk and Library may return more than one result. When the user has selected a particular room type, a list of rooms matching that room type are then displayed 231. By selecting the chosen room, the map 232 for the location of that room is then shown on the visual display.

If the user chooses to Find Staff 206 from the main menu 200, a menu of search options is displayed. These include Type in Details, Lecturer 234, Head of Department 236t, Doctor 238, Nurse 240, Priest 242 and Vicar 244. If the option to Type in Details is chosen the user can search on one or all of the following staff attributes firstname, lastname, position, office number or phone extension. Partial descriptors are permitted by the search module. If no details are entered then a list of all staff members is presented. Lecturer search works in a similar fashion and returns either a list of all lecturers or details of an individual lecturer depending on the search criteria selected by the user. The Head of Department search returns details of individual heads of department. If no details are entered then a list of all lecturers is presented. Once a staff member has been identified, the user may select to view that staff member's office on the map 246.

If Find Reception 208 is selected, the location of the reception area is shown on the map 248. The location of the reception area is predefined in the campus orientation system.

If Fire Exit 208 is selected from the main menu 202, the location of the Fire Exit closest to the current location of the cursor is shown on the map 248.

If the Find Toilet 212 option is selected from the main menu 202, the user is then presented with 3 further options - Nearest Toilet 250, Nearest Wheelchair Toilet 252, List All Toilets 254 and List All Wheelchair Toilets 256. For the Nearest Toilet 250 and Nearest Wheelchair Toilet 252 options the locations are shown on the map 258, 260. AS per above, the toilet or wheelchair toilet closest to the current location of the cursor is shown. If either of the List All Toilets 254 and List All Wheelchair Toilets 256 options are chosen, a suitable list 262, 264 is displayed, from which the user may select a suitable entry, the location of which will then be displayed on the map 266, 268.

If the user selects Options 214 from the Main Menu 202, he can view product information 270 and the like.

All map screens provided by the campus orientation system 100 have three selectable tags at the base of the screen, Options 272, Switch... 274 and Back 276. By selecting the Options 272, the user is presented with the list of menu items Switch Map 278, Find Fire Exit 210, Find Room 204, Find Staff 206, Nearest Toilet 250 and Nearest Wheelchair Toilet 252. By selecting the Switch Map 278 option, the user is present with a list 280 of other available maps, which may refer to other floors of the current building or floors of other buildings within the campus. The selected map 282 is then displayed. Similar functionality is provided by the Switch...274 option. The Fire Exit 210, Find Room 204, Find Staff 206, Nearest Toilet 250 and Nearest Wheelchair Toilet 252 options function as previously described.

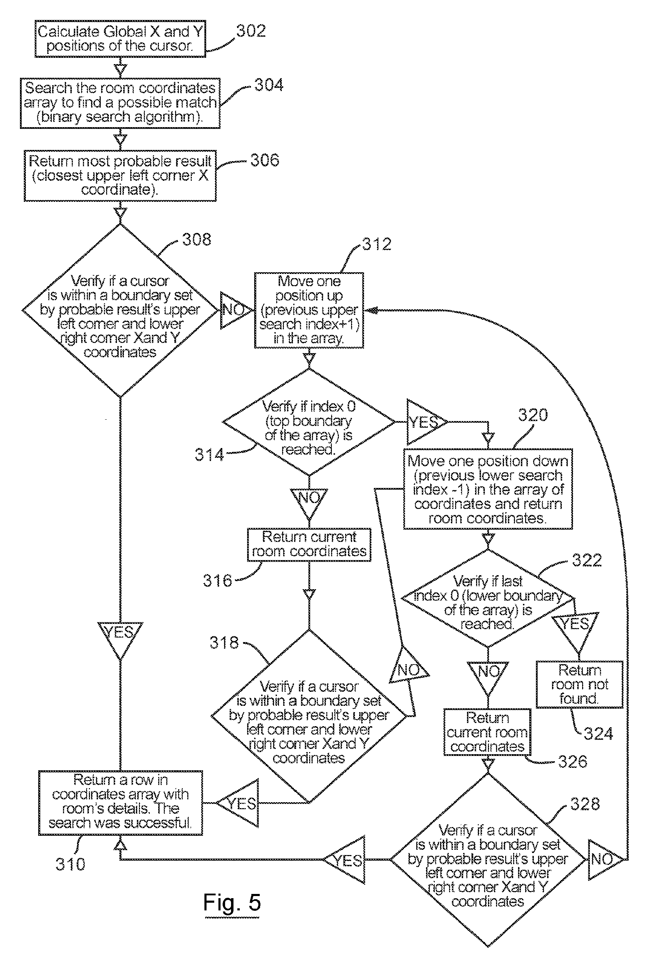

Referring now to Fig. 5, in which like parts have been given the same reference numerals as before, there is shown a flow diagram of the operation of the positioning module as carried out in identifying the location of the cursor on the screen and returning data relevant to that position.

The flow diagram commences at step 302 in which the first cursor co-ordinate and second cursor co-ordinate of the cursor's location on the campus map image are calculated. In step 304, the processing module carries out a binary search of the array of room data structures stored in the memory module. The array of room data structures is stored in a sorted manner, sorted according to one point co-ordinate. In step 306, the processing module accesses a probable room data structure, corresponding to the room data structure whose first point co-ordinate is closest to the first cursor co-ordinate of the cursor's location. In step 308, the processing module checks to see if the cursor's location is comprised within the room defined by the first room definition point and second first room definition point of the accessed room data structure. If this is true, then the flow diagram proceeds to step 310 wherein the data contained with the probable room data structure is accessed by the processing module.

If the result of step 308 is false, then the flow diagram proceeds to step 312, wherein the processing module accesses the array of room data structures 112 at the next index to that of the probable room data structure. In step 314, the processing module ensures that the upper end of the array of room data structures 112 has not been accessed. In step 316, if the upper end of the array of room data structures 112 has not been accessed, the processing module 106 accesses the room data structure at the updated index. Then in step 318, the processing module checks to see whether the cursor's location is comprised within the room defined by the first room definition point and second first room definition point of the returned room data structure. If this is true, then the flow diagram proceeds to step 310 wherein the data contained with the identified room data structure is accessed by the processing module.

Returning to step 314, if the upper end of the first room definition point and second first room definition point of the accessed room data structure has been accessed, the flow diagram proceeds to step 320 wherein the processing module accesses the array of room data structures 112 at the location having the previous storage index to the probable room data structure. In step 322, the processing module ensures that the lower end of the array of room data structures 112 has not been accessed. If the lower end of the array of room data structures 112 has been accessed, in step 324, an error code is generated indicating that the room was not found. Alternatively, in step 326, if the lower end of the array of room data structures 112 has not been accessed, the positioning module accesses the room data structure at the updated index. Then in step 328, the processing module checks to see whether the cursor's location is comprised within the room defined by the first room definition point and second first room definition point of the returned room data structure. If this is true, then the flow diagram proceeds to step 310 wherein the data contained with the identified room data structure is accessed by the processing module. If step 328 is false, the flow diagram returns to step 312, wherein the processing module accesses the next index of the array of room data structures 112. The process continues until a room data structure is returned to the processing module or an error code indicating that no room was found is returned.

The processing module operates at a low priority within the system of the handheld mobile communications device and will therefore not interfere with the other functions of the handheld mobile communications device. However, given its efficient operation, the processing module will generally operate very successfully in the processing time allotted to it. In general, there is sufficient processing time available for the processing module when the main operating system of the handheld mobile communications device is paused. Such pauses occur particularly when the visual display rendering module is causing the visual display to be refreshed.

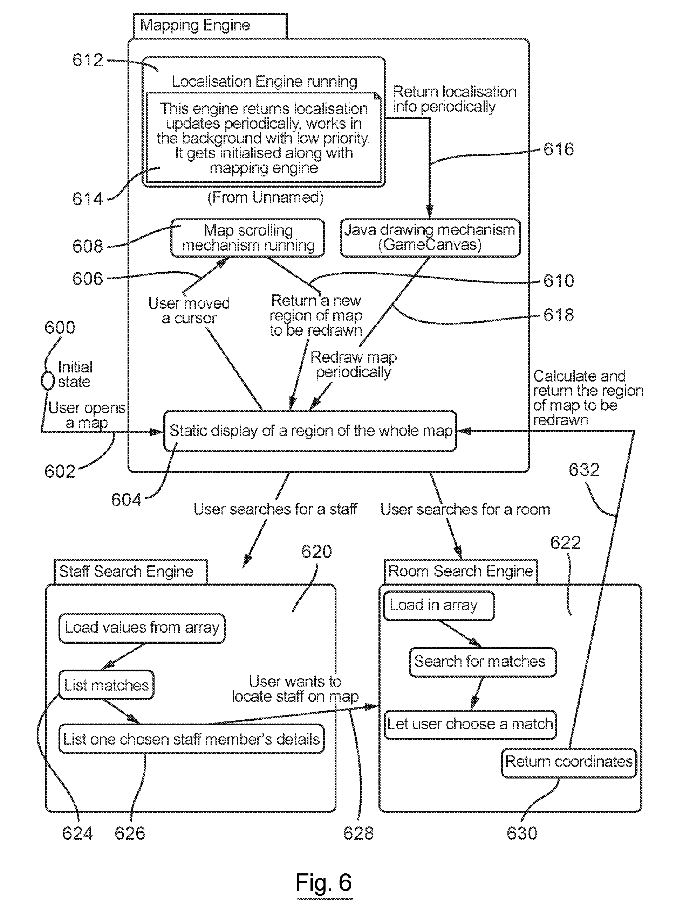

Referring now to Fig. 6, in which like parts have been given the same reference numerals as before, there is shown another flow diagram of the operation of the invention. Starting at point 600, the user opens a campus map image file at 602 and a region of that map is displayed on the visual display at 604. In 606, the user move the cursor 104, which is monitored by a map scrolling mechanism 608 of the processing module to assess where the cursor is moving to on the campus map image. If the cursor has moved towards the edge of the displayed region of map, the map is redrawn at 610, which returns to step 604. Concurrently, the localisation engine 612 of the processing module identifies the location of the cursor on the map at 614 and retrieves the room information from the array of room data structures 616. This information is displayed on the screen at 618, again returning to 604.

There is further shown the Staff Search Engine 620 and Room Search Engine 622 which allow a user to search an array of staff member details at 624 and display the chosen staff member's details at 626. Then, if desired, at 628, if the user wants to locate the chosen staff member's office on the map, the staff member's details are passed to the Room Search Engine which returns the co-ordinates of one or both of the room definitions points of the relevant room at 630. The processing module then calculates the portion of map to be displayed at 632, which is then displayed at 604. The user may also use the Room Search Engine 622 to search for a particular room if they know the details thereof, which room will be subsequently displayed on the relevant portion of the campus map image at 604.

Ideally, the map image used in the invention is in optimised png format and downloaded to the handheld mobile communications device in a jar file with the implementation code for the system of the invention.

In practice, the array of room data structures is presorted prior to insertion into the source code. In order to ensure that the array is correctly sorted prior to use, an insertion sort algorithm is run on the array. Insertion sort is a very efficient sorting algorithm for arrays which are already almost fully sorted as it the case with the pre-sorted array of room data structures. It may be more efficient to use an alternative sorting algorithm to initially sort the array.

In the specification the terms 'comprise', 'comprises', 'comprised' and 'comprising' or any variation thereof and the terms 'include', 'includes', 'included' or 'including' or any variation thereof are considered to be totally interchangeable and they should all be afforded the widest possible interpretation.

The invention is not limited to the embodiment herein described, but may be varied in both construction and detail within the terms of the claims

## Claims

1. A method of providing orientation information for a campus, the method operating in a campus orientation system on a handheld mobile communications device,
wherein the handheld mobile communications device comprises
a visual display;
a visual display rendering module for controlling the content to be rendered on the visual display;
a cursor module for operating a cursor on the visual display;
the campus orientation system comprising
a processing module;
campus map image file memory adapted to store a campus map image file, the campus map image file comprising an array of pixels, each having a first pixel co-ordinate and a second pixel co-ordinate, the pixel co-ordinates being associated with the pixel's location in the array; and
a memory module comprising an array of room data structures, each room data structure corresponding to a room of the campus map image file and comprising
at least one field of room description data;
a first room definition point and a second room definition point,
wherein the first room definition point corresponds to a first corner of the room and the second room definition point corresponds to a second corner of the room, diagonally opposite the first corner,
each room definition point comprising a first point co-ordinate and a second point co-ordinate,
the steps of the method comprising
(a) an initial step of the processing module sorting the array of room data structures according to one point co-ordinate;
and subsequently, in use,
(b) the visual display rendering module rendering the map image file on the visual display;
(c) the cursor module providing a pair of cursor co-ordinates, corresponding the cursor's location on the visual display, to the processing module, the pair of cursor co-ordinates comprising a first cursor co-ordinate and a second cursor co-ordinate;
(d) the processing module performing a binary search of the array of room data structures, comparing one cursor co-ordinate with the point co-ordinate according to which the room data structures are sorted;
(e) the processing module identifying the room data structure having the closest first point co-ordinate of the first room definition point to the first cursor co-ordinate;
(f) the processing module checking if the cursor's location is comprised within the identified room data structure;
(h) if the result of step (f) is positive, the processing unit retrieving the room description data from the identified room data structure.

2. The method of claim 1 comprising the additional steps of,
(i) in the case of the result of step (f) being negative, repeating step (f) for the adjacent room data structures in the sorted array of room data structures until a match is found and then returning to step (h).

3. The method of claim 2 in which step (i) comprises performing step (f) for the room data structure in the sorted array previous to the identified room data structure.

4. The method of claim 2 or 3 in which step (i) comprises performing step (f) for the room data structure in the sorted array subsequent to the identified room data structure.

5. The method of any preceding claim in which step (f) comprises
(j) the processing module checking if the first cursor co-ordinate is between the first point co-ordinate of the first room definition point of the identified room data structure and the first point co-ordinate of the second room definition point of the identified room data structure; and
(k) if the result of step (j) is positive, the processing module checking if the second cursor co-ordinate is between the second point co-ordinate of the first room definition point of the identified room data structure and the second point co-ordinate of the second room definition point of the identified room data structure.

6. The method of any preceding claim comprising the additional step of
(I) the processing module passing the retrieved room description data to the visual display rendering module for display.

7. The method of any preceding claim in which the step of the visual display rendering module rendering the map image file on the visual display comprises
the visual display rendering module rendering a portion of the campus map image file on the visual display; and
the method comprises the additional steps of
the processing module converting the cursor co-ordinates into modified cursor co-ordinates corresponding the cursor's location on the campus map image file; and
using the modified cursor co-ordinates in place of the cursor co-ordinates in the remaining steps.

8. The method of any preceding claim in which the step of the processing module sorting the array of room data structures according to one point co-ordinate comprises sorting the array using an insertion sort algorithm.

9. The method of any preceding claim in which each room data structure consists of:
at least one room description data field;
a first room definition point; and
a second room definition point;
each room definition point consisting of
a first point co-ordinate and
a second point co-ordinate.

10. A campus orientation system for use in a handheld mobile communications device, the campus orientation system comprising
a processing module;
campus map image file memory adapted to store a campus map image file, the campus map image file comprising an array of pixels, each having a first pixel co-ordinate and a second pixel co-ordinate, the pixel co-ordinates being associated with the pixel's location in the array;
a memory module comprising an array of room data structures, each room data structure corresponding to a room of the campus map image file and comprising
at least one field of room description data;
a first room definition point and a second room definition point,
wherein the first room definition point corresponds to a first corner of the room and the second room definition point corresponds to a second corner of the room, diagonally opposite the first corner,
each room definition point comprising a first point co-ordinate and a second point co-ordinate.

11. A campus orientation system as claimed in claim 10 in which the handheld mobile communications device comprises
a visual display;
a visual display rendering module for controlling the content to be rendered on the visual display;
a cursor module for operating a cursor on the visual display;
wherein the processing module is adapted to
instruct the visual display rendering module to render the campus map image file on the visual display;
receive the location of the cursor on the visual display from the cursor module;
calculate the pixel co-ordinates corresponding to the cursor's location on the visual display;
identify the room data structure associated with the position of the cursor by carrying out a binary search of the an array of room data structures;
retrieve the room description data for the identified room data structure.

12. A campus orientation system as claimed in claim 11 in which the processing module is further adapted to instruct the visual display rendering module to display the retrieved room description data.

13. A campus orientation system as claimed in any of claims 10 to 12 in which the array of room data structures are sorted according to one point co-ordinate.

14. A campus orientation system as claimed in any of claims 10 to 13 in which each room data structure consists of:
at least one room description data field;
a first room definition point; and
a second room definition point;
each room definition point consisting of
a first point co-ordinate and
a second point co-ordinate.

15. A campus orientation system as claimed in any of claims 10 to 16 in which the memory module further comprises an array of campus staff data structures and a search module adapted to carry out searches on the array of campus staff data structures.
